(19) Europäisches Patentamt

European Patent Office

Office européen des brevets

(11) **EP 0 713 900 B1**

(12) **EUROPEAN PATENT SPECIFICATION**

(45) Date of publication and mention
of the grant of the patent:
**21.05.2003 Bulletin 2003/21**

(51) Int Cl.⁷: **C08K 13/04**, B60N 2/00

(21) Application number: **95118655.0**

(22) Date of filing: **27.11.1995**

(54) **Shock absorbing material and vehicle seat using the shock absorbing material**

Stossabsorbierendes Material und Fahrzeugsitz aus diesem Material

Matériau amortissant les chocs et siège de véhicule utilisant ce matériau

(84) Designated Contracting States:
**DE FR GB**

(30) Priority: **25.11.1994 JP 31584394**
**30.05.1995 JP 13239895**

(43) Date of publication of application:
**29.05.1996 Bulletin 1996/22**

(73) Proprietor: **YAMAHA HATSUDOKI KABUSHIKI KAISHA**
**Iwata-shi Shizuoka-ken, 438 (JP)**

(72) Inventors:
• **Kaneko, Kazuyoshi**
**Shizuoka-ken, 438 (JP)**
• **Ishihara, Hiroyuki**
**Shizuoka-ken, 438 (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**DE-A- 2 938 287**          **DE-A- 4 100 155**
**US-A- 5 272 001**

**Description**

This invention relates to a vehicle seat comprising a cushion and a process of manufacturing a shock absorbing member.

Generally, vehicle seats comprising a cushion for example made of urethane foam which is covered with a skin. A motorcycle seat, for instance, normally comprising urethane elastomer as a cushion which is covered by a synthetic skin secured to a bottom seat of a hard plate like member.

Vibrations of the motorcycle body generated by its engine and/or the irregularities of the road during running are absorbed by the cushion, so as to be transmitted to an occupant as little as possible.

Since a cushion made of urethane elastomer only is not sufficient to absorb shocks, it is known for such a motorcycle seat to use a cushion having a urethane foam body in which a viscoelastic member of viscoelastic urethane elastomer or the like is used to absorb and reduce vibrations (Japanese patent laid open application Hei2-286481).

However, by using soft urethane such as super-soft urethane elastomer as a matrix resin, it is difficult and cumbersome to handle conventional viscoelastic material because of its high adhesive properties, so that the production costs are increased. In addition, this convention viscoelastic material shows insufficient damping properties because, although such a viscoelastic shock absorbing member can absorb vibrations, an excessively large value of spring constant of the viscoelastic member results in a hard seat which is not very comfortable for an occupant, especially during a long journey.

It is therefore an objective of the present invention to provide an improved vehicle seat as indicated above which has high vibration absorption characteristics.

According to the invention, this objective is solved for a vehicle seat as indicated above in that said cushion or at least one part thereof is a shock absorbing member comprising super-soft urethane elastomer, said super-soft urethane elastomer comprising a matrix resin and resinous micro balloons.

An advantageous embodiment of a shock absorbing material comprising resinous micro balloons by an amount from 1 to 5 weight per cent.

In order to provide excellent vibration absorption characteristics it is preferred that the ratio of the spring constant in compression to the spring constant in tension of said material is larger than or equal to 1.1 and that the normal storage modulus is smaller than or equal to 0.234 N/mm$^2$, preferably 0.22 N/mm$^2$.

A smooth transition between two different materials is desirable, it is preferred that the normal storage modulus of said shock absorbing member varies vertically, so as to decrease towards the top end/or the bottom face and/or horizontally so as to decrease to the respective side faces.

It is a further objective of the present invention to provide a process of manufacturing a shock absorbing member, in particular for a vehicle seat, which has improved vibration shock absorption characteristics.

According to the present invention, this objective is solved by using the difference in density between the matrix resin of the super-soft urethane elastomer and the micro balloons and the gravity or centrifugal force in molding said shock absorbing member or by mixing magnetic substances, such as iron powder, in the matrix resin in molding said shock absorbing member and provide an inclination to the distribution of said magnetic substances in the matrix resin by means of a magnetic field.

According to such structure of shock absorbing material as described above adhesive property of the shock absorbing material having super-soft urethane elastomer of high adhesive property as matrix resin is lowered, which makes its handling easy and facilitates assembly of the shock absorbing material member.

In addition, by setting the mixing ratio of resinous microballoon as described above , mixture of super-soft urethane elastomer and resinous microballoon will neither separate into two layers after molding nor allow the ingress of air because of its high viscosity.

Further by constituting the vehicle seat with such shock absorbing members, the vibration absorption characteristic of the seat will be improved to a large extent due to the existence of shock absorbing material, and super-soft urethane elastomer containing resinous microballoon will prevent weight increase after assembly of the shock absorbing material to the seat and improve the comfort of the seat, compared with the conventional shock absorbing material of viscoelastic urethane elastomer.

Moreover, by constituting the vehicle seat with shock absorbing members of specified shapes which can be disposed in the lower portion of the cushion, regardless of the irregularities in the shape of upper surface of the bottom seat, the surface of the shock absorbing material is wholly covered with the cushion body (urethane foam) and will prevent the shock absorbing member from being affected by ambient conditions such as heat and gasoline vapour.

Other preferred embodiments of the present invention are laid down in further dependent claims.

In the following, the present invention is explained in greater detail with respect to several embodiments thereof in conjunction with the accompanying drawings, wherein:

Fig. 1 is a side view in the vicinity of a motorcycle seat as an embodiment having a shock absorbing member of this invention.

Fig. 2 is a transversely sectional view along the line A-A of the seat in Fig. 1.

Fig. 3 is a diagram showing the relation between the mixing ratio of resinous microballoon and loss modulus for the shock absorbing material.

Fig. 4 shows illustrations of (A) the seat of the embodiment to be tested and (B) vibration test method, for comparing vibration transmission factors of the seat using shock absorbing material of this invention and a seat of conventional urethane foam.

Fig. 5 is a diagram showing the comparison of vibration transmission factors of the seat using shock absorbing material of this invention and a seat of conventional urethane foam.

Fig. 6 is a schematic view of a device for testing samples of shock absorbing materials.

Fig. 7 shows side views (A) and (B) of pressure jigs A and B for measuring deformation of samples through the test device in Fig 6, respectively.

Fig. 8 is a side view showing jigs C and D for measuring spring constants in compression and tension through the test device in Fig. 6 together with a sample bonded to these jigs.

Fig. 9 is a diagram showing the distribution of shock absorbing material samples on the coordinates with bench evaluation value F of feeling of fitness as the vertical axis and spring constant ratio p as the horizontal axis.

Fig. 10 is a diagram showing the distribution of shock absorbing material samples on the coordinates with physical shock to rider's buttocks as the vertical axis and normal storage modulus as the horizontal axis.

Fig. 11 is a partially cross sectional side view showing another embodiment of a seat using shock absorbing material of this invention.

Fig. 12 is a transversely sectional view along the line B-B of the seat in Fig. 11.

Fig. 13 is a transversely sectional view showing still another embodiment of a seat using shock absorbing material of this invention.

Fig. 14 is a longitudinally sectional view showing dies for molding a cushion with an embedded shock absorbing material in the seat of Fig. 13.

Figs. 15 to 18 are sectional views of seats according to further embodiments,

Fig. 19 shows a longitudinal section view of another embodiment according to the invention,

Fig. 20 shows a sectional view of a further embodiment,

Fig. 21 is a side view showing the rear portion of a motorcycle, of embodiment 1,

Fig. 22 is a sectional view through the line 2-2 of Fig. 21, of embodiment 1,

Fig. 23 is a side view of the test device for Test 2, of embodiment 1,

Fig. 24 is a diagram showing the relation between time and the output of the load cell, of embodiment 1,

Fig. 25 is a diagram showing the relation between the apparent normal loss modulus and the rebound angle, of embodiment 1,

Fig. 26 is a diagram showing the relation between the apparent normal storage modulus and the transmitted acceleration of embodiment 1.

Fig. 27 is a diagram showing the relation between the apparent normal storage modulus and the apparent normal loss modulus of embodiment 1,

Fig. 28 is a view corresponding to Fig. 21 of embodiment 2,

Fig. 29 is a sectional view through the line 9-9 of Fig. 28, of embodiment 2.

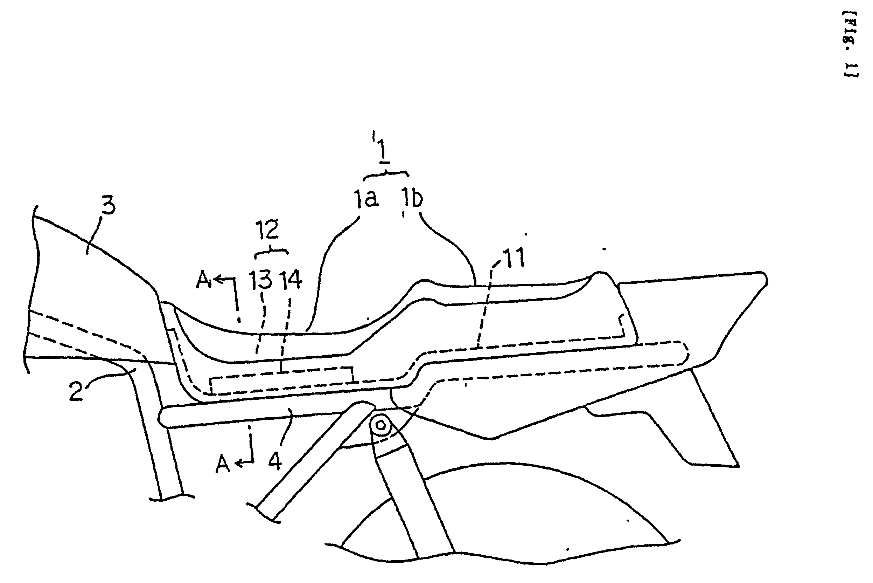

Fig. 1 is a schematic view, showing a motorcycle seat using shock absorbing material of the invention. A seat 1 is a tandem seat with a front seat portion 1a for a rider and a rear seat portion 1b for a passenger. The front seat portion 1a and the rear seat portion 1b are formed to be connected stepwise, stepwise continuously, disposed rearward of a fuel tank 3 which is provided upward of a main frame 2, and fixed to a pair of seat frames 4 extending rearward from the main frame 2.

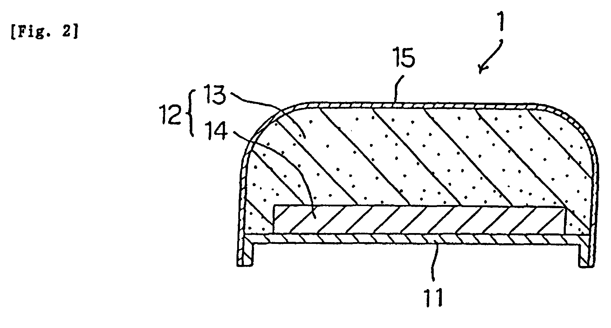

Fig. 2 shows a transversely sectional view of the front seat portion 1a, along a line A-A of Fig. 1. In this embodiment, on a bottom seat 11 of a plate-like body of metallic material or hard synthetic resin is placed a cushion 12 comprising a cushion body 13 made of urethane foam and a shock absorbing member 14 made of viscoelastic material, and a seat skin 15 comprising a sheet of PVC (polyvinylchloride) leather as a surface layer and a sheet of wooly nylon as a lining covers onto the surface of the cushion 12 and is fixed to the peripheral portion of the bottom seat 11.

In the motorcycle seat 1 described above, a shock absorbing member 14 disposed in the recess formed at the bottom of the cushion body 13 is a viscoelastic member whose matrix resin is super-soft urethane elastomer containing 1 to 5 % (weigh %) of resinous microballoon.

Whereupon, when resinous microballoon is mixed in super-soft urethane elastomer, if the mixing ratio (weight %) of resinous microballoon to super-soft urethane elastomer is less than 1 %, the mixture will separate into two layers after molding process, and if the mixing ratio is more than 5 %, the mixture will allow ingress of air due to excessively high viscosity during molding because of its high viscosity.

Super-soft urethane elastomer used as matrix resin in the shock absorbing material 14 is, for example, 1) a mixture with: mixture of trifunctional polyol and difunctional polyol (polyether polyol, polyester polyol), trially isocyanurate, MDI (diphenylmethane-4, 4'-diisocyanate)/ TDI (tolyene diisocyanate) pre-polymer, Bi-catalyst Sn-catalyst, and phthalic acid plasticizer, 2) new urethane resin disclosed in Japanese Patent Publication Hei 3-17848 (Applicant: IIDA SANGYO K.K.), 3) Super-soft elastomer composition disclosed in Japanese Unexamined Patent Publication Hei 3-37217 (Applicant: K.K. NIPPON AUTOMATION etal.); 4) ELASCOAT (tradename. made by POLYURETHANE KASEI K.K.). The Ascar C hardness of these examples is not more than 15 measured by a tester, a durometer made by KOBUNSHI KEIKI K.K. for soft materials.

Resinous microballoon mixed in matrix resin in the shock absorbing material 14 is such that butane gas is filled in the shells (average grain size of 40 to 60 μ, grain diameter ranging 10 to 100 μ) of vinylidenechloride resin (vinylidenechloride acrylonitrile copolymer), and has been on sale in the market for years under the tradename of Expancell DE (made by Expancell AB., Sweden) as a filler of low density.

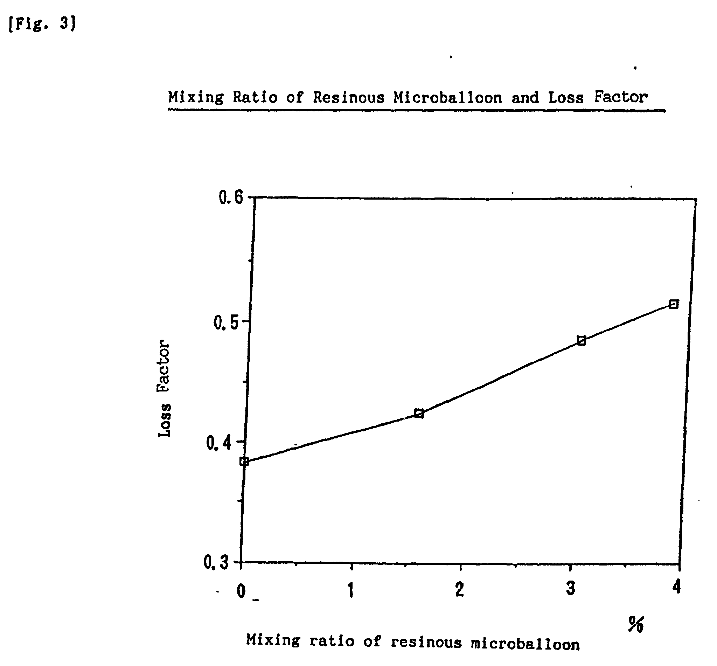

The shock absorbing material 14 composed of super-soft urethane elastomer mixed with resinous microballoon as described above, shows a lower adhesive property than super-soft urethane elastomer itself and has increasing loss factor with the increase of ratio of resinous microballoon as shown in Fig. 3. It is light (specific gravity = 0.62) in weight, has a small impact resilience factor (8 %), shows small change in hardness with the change of temperature, and provides a good feeling of fitness to the seat in riding, compared with other viscoelastic member used as the shock absorbing material of the conventional motorcycle seats.

For motorcycles, vibration from the road surface is constantly transmitted to the rider's body. As for the vibration of the rider on the seat, experiments have shown that the vibration transmission factor in resonance is decreased with the increase in loss factor of the seat.

Then, vibration tests were made for a motorcycle seat 1 having a cushion 12 fitted with a sheet of shock absorbing material 14 of the present embodiment which has a higher loss factor due to mixing of resinous microballoon, and for a conventional motorcycle seat with a cushion made of only urethane foam as a comparison sample. Vibration transmission factors were compared each other.

Shock absorbing material 14 used in the embodiment is such that urethane elastomer such as Orotex U 1000 or U 1003 (tradename, made by IIDA SANGYO K.K.) is used as super-soft urethane elastomer and 3 % of EXPANCELL DE (tradename, made by EXPANCELL AB., Sweden) as resinous microballoon is mixed therein.

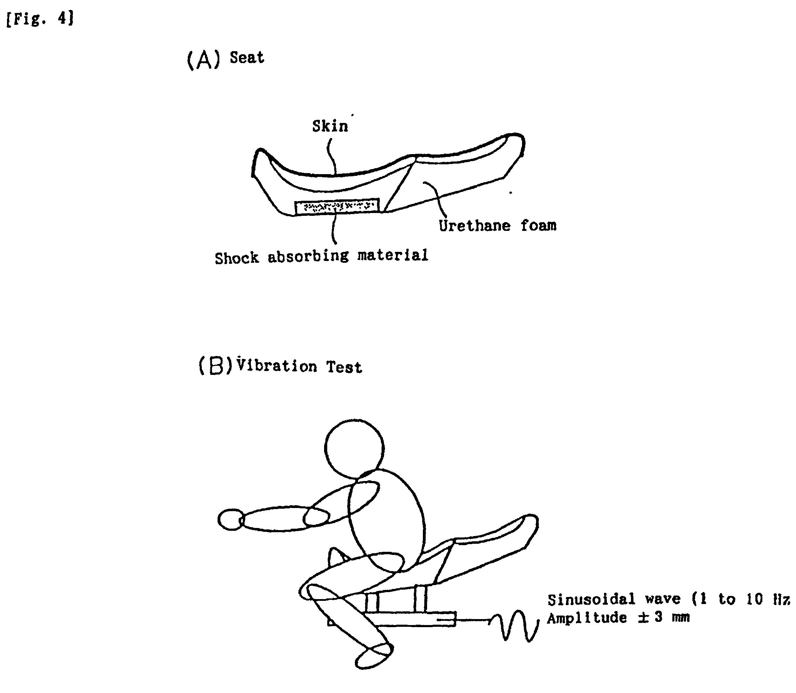

The vibration tests were run for a seat of the embodiment in which the shock absorbing member 14 as shown in Fig. 4(A) is incorporated and for a seat 1 with a cushion 12 made of urethane foam only.

Each seat 1 was set to a vibration testing machine and a rider sat on the seat 1 in a riding posture as shown in Fig. 4(B), sinusoidal vibration of 1 to 10 Hz and ± 3 mm amplitude (vertical direction) being applied to the seats 1 provided that vibration is generated by actual road conditions, and acceleration was measured by accelerometers placed on the seat rail and between the seat and the rider's buttocks. Vibration transmission factor was obtained by calculating the ratio of these accelerations values measured.

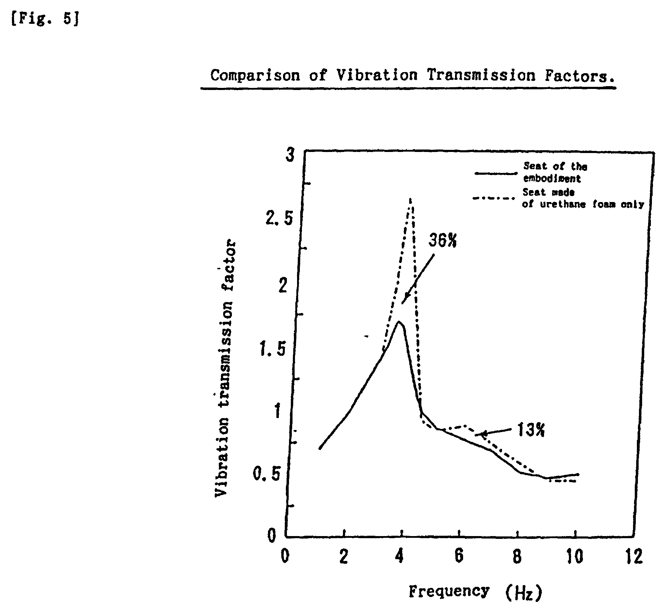

In Fig. 5, it can be seen from the result that the vibration transmission factor of the seat of this embodiment is reduced by 36 % at resonance and by 13 % even in the vicinity of 6 Hz. Considering that the human abdomen is generally said to be resonant at the frequency of 4 to 8 Hz, it can be stated that the seat according to the embodiment is effective for reducing resonance of the rider's abdomen.

On the other band, for the feeling of fitness with regard to the shock absorbing material 14, no other test than the sensory evaluation by the rider's feeling has been made and objective numerical evaluation has been considered to be difficult. However, the inventor of this invention believed that a good feeling of fitness would be provided if the seat receives the rider's buttocks as a whole firmly without large deformation and comes into contact mildly with his coccyx or hip-bone, respectively, protruding in his riding posture. On the basis of this concept, the following tests were made to measure the feeling of fitness.

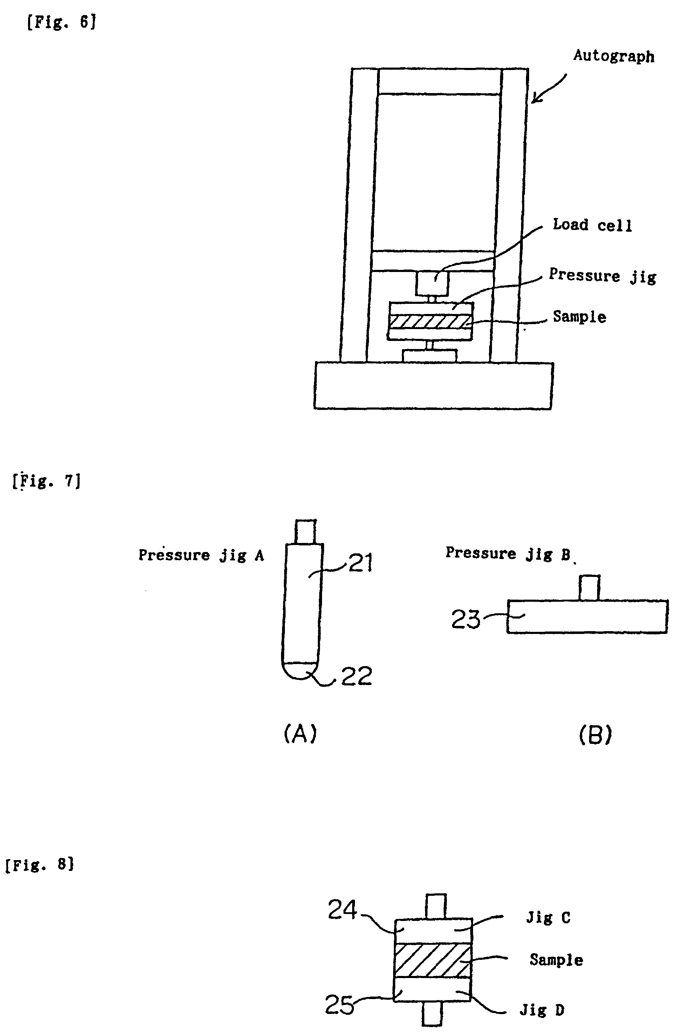

First, using, as a test device, AGS 500A Autograph (tension/compression tester) made by SHIMADZU CORP., shown in Fig. 6, each of the test samples of 100 mm diameter and 20 mm thickness is fixed to the Autograph by a pressure jig A with a cylindrical portion 21 of 30 mm diameter and a semi-spherical tip 22 as shown in Fig. 7(A) and a pressure jig B with a disk portion 23 of 100 mm diameter as a pushing surface as shown in Fig. 7(B), and then (1) each sample is loaded by the pressure jig A, and the load (value X) is measured when deformation of the sample becomes 5 mm, (2) the sample is loaded by the pressure jig B, and the load (value Y) is measured when the deformation becomes 5 mm, and (3) the bench evaluation test value of the feeling of fitness for the seat is calculated as $F = Y/X$.

Similarly, using AGS 500A Autograph (tension/compression tester) made by SHIMADZU CORP. shown in Fig. 6 as a test device, each of the test samples of 30 mm diameter and 20 mm thickness, is placed to be bonded between jigs C and D with respective disk portions 24 and 25 of 30 mm diameter and set to the Autograph. Then (I) each sample is measured of its spring constant (X1) when compressed by 2 mm, (2) the sample is measured of its spring constant (X2) when stretched by 2 mm, and (3) the ratio p of spring constant in compression to that in tension is calculated as p = X1/X2.

The results of the bench evaluation value F of the feeling of fitness and the spring constant ratio p measured by the tests described above and the normal storage modulus $E_1$ measured by a separate test according to JIS K6394, are shown below in Table 1.

Samples are as follows:

A. Embodiment of this invention (OROTEX (tradename) mixed with EXPANCELL DE (tradename) by 3 % (weight %)).

B. Conventional urethane foam.

C. Urethane foam 1 with low resilience factor (Durene 1).

D. Urethane foam 2 with low resilience factor (Durene 2).

E. Urethane foam 3 with low resilience factor (Durene 3).

F. Shock absorbing urethane foam (Poron).

G. Shock absorbing urethane foam (Orotex U 1003).

H. Shock absorbing urethane foam (Solbosane).

[Table 1]

| Sample | p value | F value | Normal storage modulus (Mpa)* |
|--------|---------|---------|-------------------------------|
| A | 1. 30 | 57. 3 | 0. 102 |
| B | 0. 66 | 15. 7 | 0. 0361 |
| C | 1.21 | 19. 8 | 0. 493 |
| D | 1. 21 | 22. 8 | 0. 224 |
| E | 1. 11 | 23. 1 | 0. 0577 |
| F | 0. 964 | 1 6. 2 | |
| G | 1. 18 | 43. 1 | 0. 150 |
| H | 1. 29 | 67. 4 | 0.378 |

*: The normal storage modulus is measured according to JIS K6394 for samples of 100 mm diameter and 20 mm thickness.
<Test condition>
Average strain 10 %
Strain amplitude 1 %
Note: 1 Mpa in the table is equal to 1 $N/mm^2$ (0.101972 $kgf/mm^2$).

The sensory evaluation values of the seats using, as shock absorbing material, the same materials as these samples are shown below in Table 2.

[Table 2]

| Sample | feeling of fitness in sensory evaluation (feeling on the seat)* | Physical shock to rider's buttocks in sensory evaluation (riding test)* |
|--------|-----------------------------------------------------------------|--------------------------------------------------------------------------|
| A | 5 | 3 |
| B | 1 | 5 |
| C | | 1 |
| E | 3 | |
| G | 4 | 3 |
| H | 5 | 2 |

* 1: very poor, 2: poor, 3: fair, 4: good, 5: very good.

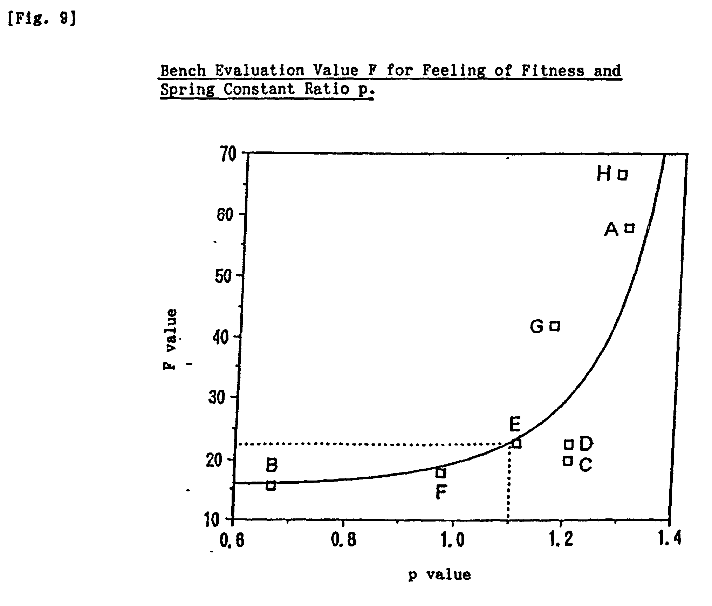

Fig. 9 shows the distribution of the test results for samples presented in Table 1, on the coordinates with bench evaluation value F of feeling of fitness as the vertical axis and spring constant ratio p as the horizontal axis. From the Figure together with Table 2 above, it can be stated that the material whose spring constant ratio p in compression and tension is more than or equal to 1.1, will provide a good feeling of fitness to the seat.

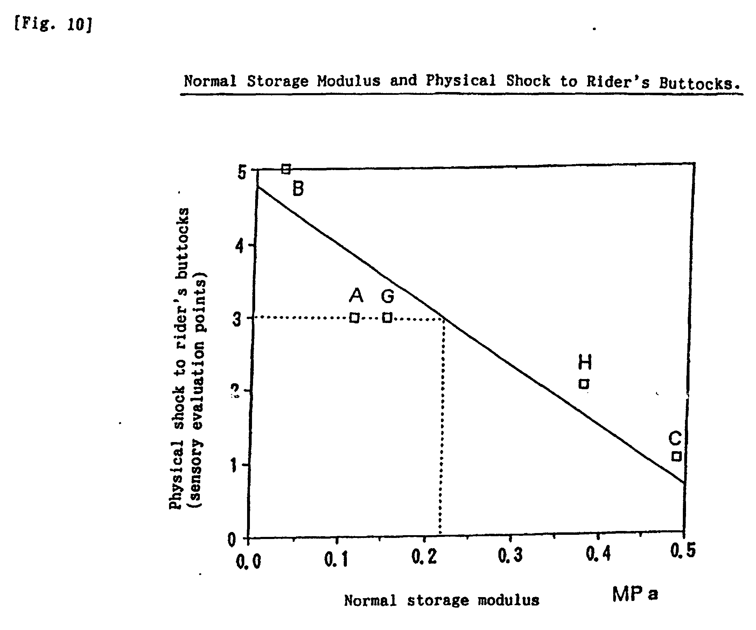

Fig. 10 shows the relation between normal storage modulus $E_1$ in Table 1 and physical shock to the rider's buttocks in Table 2. From the Figure, it can be stated that normal storage modulus below 0.22 Mpa will give little physical shock to the rider's buttocks.

That is, from these test results described above, it is found even from numerical values that the shock absorbing material 14 of this embodiment measured as sample A, which has p value of 1.30 and normal storage modules $E_1$ of 1.102 N/mm$^2$ (Mpa), will provide a good feeling of fitness to the seat with a less physical shock to the rider's buttocks.

As described above, for shock absorbing material and vehicle seats using the shock absorbing material, an embodiment of a tandem seat 1 of a motorcycle has been explained, in which shock absorbing member 14, fitted in the recess formed in the bottom of a cushion body 13, is placed on the upper surface of a bottom seat 11, but this invention should not be limited to the foregoing embodiment or the like.

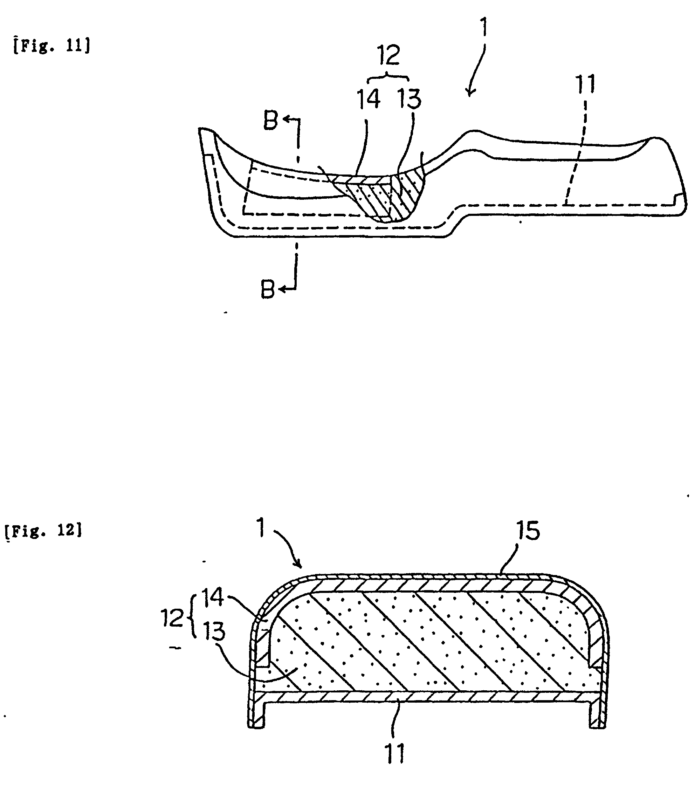

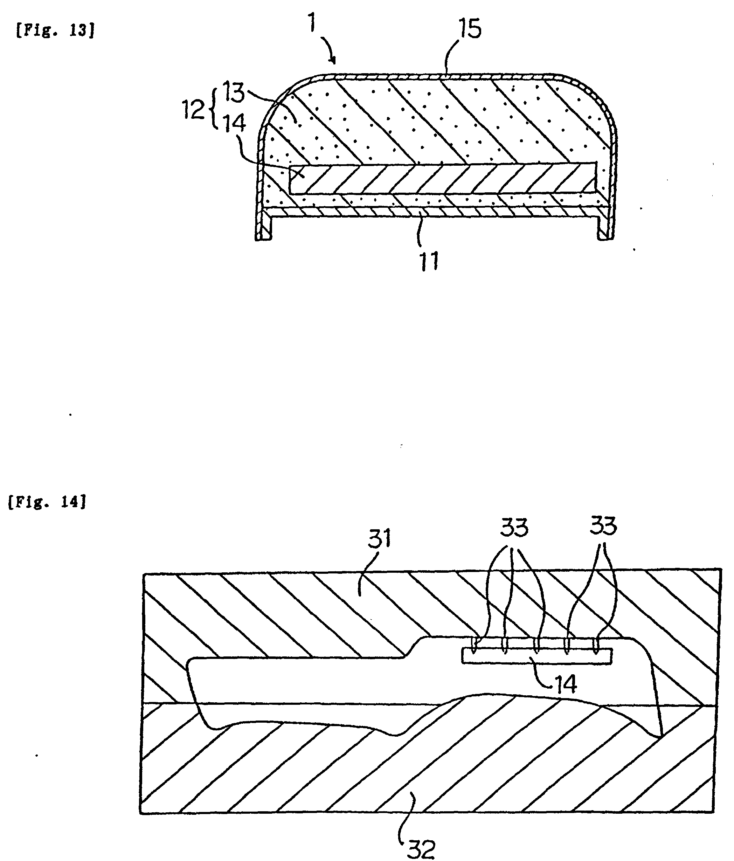

As for the assembly structure to the tandem seat 1 of the motorcycle, for example, the shock absorbing member 14 may be interposed simply between the cushion body 13 and the bottom seat 11, may be layered on the upper surface of the cushion body 13, as shown in Figs.11 and 12, or further, may be assembled so as to be embedded in the cushion body 13 of urethane foam as shown in Fig. 13.

In that case, the shock absorbing member 14 is secured beforehand with pins 33 or the like in the dies 31 and 32 for molding cushion body of urethane foam as shown in Fig. 14, and then urethane stock solution is poured into the dies to be foamed. In this way, the shock absorbing member 14 is embedded and assembled in the cushion body 13 of urethane foam molded in a seat-like shape as shown in Fig. 13.

As the shock absorbing material member 14 is embedded to be assembled in the cushion body 13 of urethane foam, when the shock absorbing material 14 is intended to be arranged in the lower portion of the cushion body 13, it need not be formed so as to be fitted to the irregularities of the upper surface of the bottom seat, which results in the cost reduction in manufacturing. In addition, the piece of shock absorbing member 14 is enclosed by urethane foam 13, so that the influence of heat or gasoline vapor in the ambient atmosphere on the shock absorbing material 14 will be reduced.

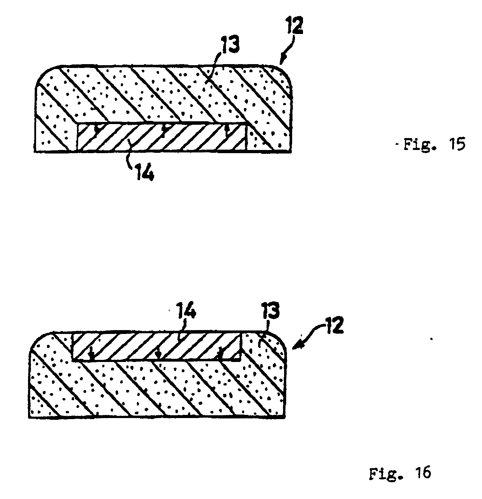

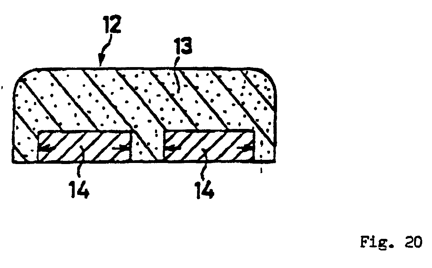

Various methods can be considered according to the arrangement or the like of the shock absorbing member of piece 14, of changing values of its normal storage modulus in the specified portions, and several examples are shown in Figs. 15-20. Arrows in the figures indicate the direction of gradual change in the normal storage modulus in the shock absorbing piece 14 showing a decreasing (softer) normal storage modulus toward the points of arrows.

Fig.15 corresponds to the essential embodiment (see Fig . 2 ), that is, the shock absorbing piece 14 is arranged in the bottom side of the cushion 12, and its normal storage modulus varies vertically so as to decrease toward the top face.

In an embodiment shown in Fig. 16 , the shock absorbing piece 14 is arranged in the top side of the cushion 12, and its normal storage modulus varies vertically so as to decrease toward the bottom face, approaching that of the urethane foam 13 at the bottom face adjacent to the urethane form (cushion body) 13.

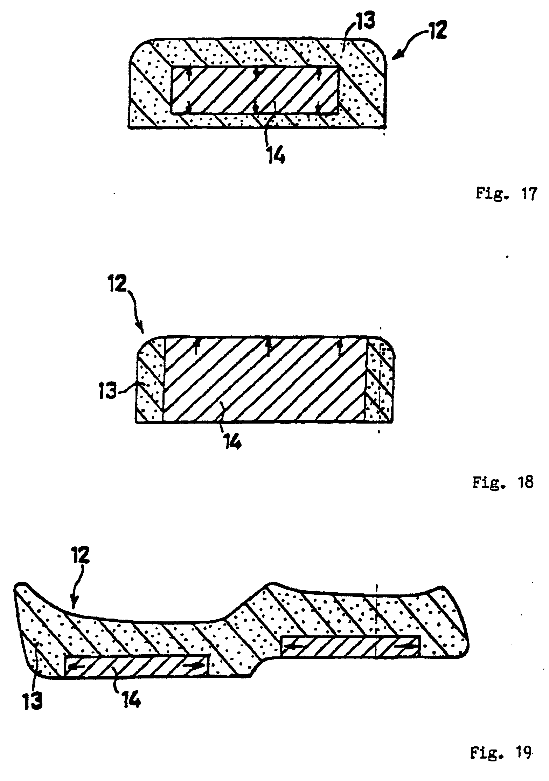

In another embodiment shown in Fig. 17, the shock absorbing piece 14 is arranged in the inner middle portion of the cushion 12, and its normal storage modulus varies vertically so as to be relatively large at the center and decreasing gradually toward the bottom and top faces, approaching that of the urethane form 13 at the bottom and top faces adjacent to the urethane foam (cushion body) 13.

In these embodiments, since the normal storage modulus of either one or both of top and bottom sides of the shock absorbing piece 14 adjacent to the urethane form 13 also approach the normal storage modulus of the urethane form 13, abrupt hardness change is avoided at these boundaries between the shock absorbing piece 14 and urethane form 13, which effects improved feeling of fitness to the seat.

Still another embodiment shown in Fig. 18, urethane forms 13 are arranged on both sides of the cushion 12 and the shock absorbing piece 14 occupies the whole section from the top to the bottom of the cushion 12 between the urethane foams, its normal storage modulus varying vertically so as to decrease toward the top. In this embodiment, the seat with hardness decreasing toward the top will improve the feeling of fitness to the seat.

While, in the foregoing embodiment, the normal storage modulus of the shock absorbing piece 14 is adapted to vary vertically, it is possible to change values of the normal storage modulus approximately horizontally, for example, longitudinally or transversely as shown in Figs. 19-20. In this case, the normal storage modulus is set to be relatively large in the central portion of the shock absorbing piece 14 and decreased toward the side faces adjacent to the urethane foam 13, approaching that of the urethane foam 13.

In these embodiments, abrupt hardness change is also avoided at the boundary portions between the shock absorbing piece 14 and the urethane form 13 so that the rider's feeling of fitness to the seat in riding will be improved.

Various methods can be considered for molding the shock absorbing piece 14 with structure of the normal storage modulus varying continuously as described above, and several examples will be listed below.

    (1) Make use of the difference in density between matrix resin (super-soft urethane elastomer) and filler (resinous microballoon), and the gravity or the centrifugal force in molding the shock absorbing piece 14 so as to give inclination to the distribution of the filler. In this case, portions with higher filler density give larger normal storage moduli and the value of the modulus decreases with decreasing filler density.

(2) Mix magnetic substance such as iron powder in matrix resin in molding the shock absorbing piece 14 to give inclination to the distribution of the powder of magnetic substance in matrix resin by the magnetic field so as to change the values of the normal storage modulus according to the distribution of the magnetic powder.

(3) If the matrix resin is usable for injection molding, inject materials with-different hardnesses using a multicolor injection machine in succession orderly from soft materials to hard ones.

(4) Foam the matrix resin so as to change the magnitude of the expansion ratio gradually.

(5) Foam the matrix resin and further impregnate the expanded portion with the resin so as to change the quantity of impregnation gradually.

(6) Change the bridging density of the matrix resin gradually.

(7) Change the molecular weight of the matrix resin gradually.

(8) Laminate thin materials with different hardnesses orderly to form a shock absorbing piece 14.

The cushion fitted with a piece of shock absorbing material 14 of the present invention can be applied not only to a tandem seat for motorcycles such as the foregoing embodiments, but a single seat for motorcycles, or seats for other vehicles or water vehicles such as so-called waterbikes, and further, other applications such as grips for motorcycle handle bars or sole materials.

While, in the foregoing embodiments, a cushion body 13 of urethane foam and a piece of shock absorbing material 14 are assembled to form a cushion 12, it is possible to constitute a cushion made only of shock absorbing material. In this case, the values of the storage modulus of the shock absorbing piece are also changed continuously in the vertical direction, for example, larger in the inner portion and smaller in the outer portion of the shock absorbing piece so that the vibration reduction function and the cushioning characteristic will be improved.

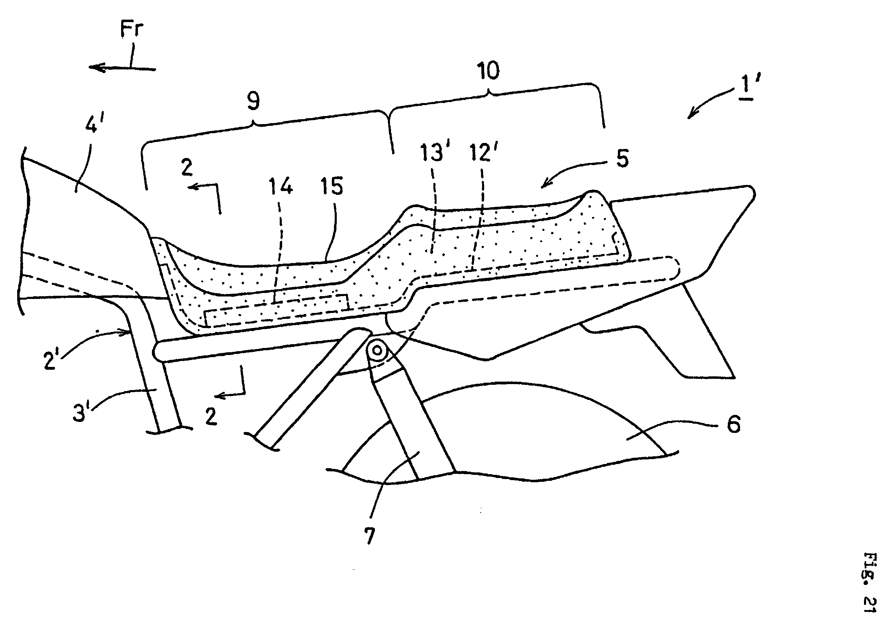

A further embodiment 1 is explained in Fig. 21 through Fig. 27.

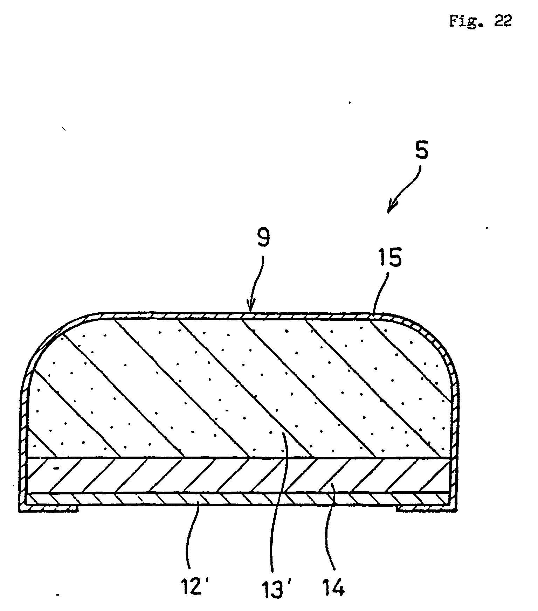

In Figs. 21 & 22, the numeral 1' designates a motorcycle, an example of mounting type vehicle, and an arrow Fr in the figure shows the forward direction.

A body 2' of the motorcycle 1' has a body frame 3', at the front of which is supported a fuel tank 4'and at the rear of which is supported a seat 5. Also, at the rear of the body frame 3 is supported a rear wheel 6 through a rear arm and a shock absorber 7.

The front portion of the seat 5 is a main seat 9 on which an operator, a rider, sits in a straddle fashion, and the rear portion of the seat 5 is a tandem seat 10 on which a passenger, another rider, sits in the same fashion. The main seat 9 and the tandem seat 10 are molded integrally.

The seat 5 has a seat base 12' to be mounted on the body frame 3 and the seat base 12' is made of plastic or sheet metal. On the seat base 12' is placed an elastic cushion 13' of urethane foam. The main seat 9 includes a shock absorbing member of viscoelastic body 14 interposed between the seat base 12' and cushion 13, and the seat base 12', cushion 13' and viscoelastic body 14 are arranged together in layers, which are covered with a soft skin 15 of plastic sheet such as plastic leather (PVC).

The apparent normal storage modulus ($G_1$) of the viscoelastic body 14 satisfies the inequality of 0.222 MPa < $G_1$ < 0.834MPa, and its apparent normal loss modulus ($G_2$) the inequality of 0.061MPa < $G_2$ < 0.469MPa.

The reason for defining the apparent normal storage modulus ($G_1$) and apparent normal loss modulus ($G_2$) as described above will be explained below.

Values of the storage spring constant, viscosity coefficient, apparent storage modulus ($G_1$) and apparent normal loss modulus ($G_2$) were evaluated for each of viscoelastic bodies 14 (A-G) according to "Test 1" of JIS K6394-1976, and the results are shown in Table 3.

In Table 3, 1 MPa is equal to 1 N/mm$^2$ (0.101972 kgf/mm$^2$) (the same relation applies to the following tables).

[Table 3]

| Symbol | Test 1 | | | |
|---|---|---|---|---|
| | Storage Spring Constant | Viscosity Coefficient | Apparent Normal Storage Modulus ($G_1$) | Apparent Normal Loss Modulus ($G_2$) |
| | N/mm | N-sec/mm | MPa | MPa |
| A | 41.2 | 0.147 | 0.105 | 0.016 |
| B | 85.9 | 0.824 | 0.219 | 0.092 |
| C | 270 | 2.58 | 0.687 | 0.288 |
| D | 224 | 2.32 | 0.570 | 0.260 |
| E | 386 | 6.34 | 0.984 | 0.710 |
| F | 588 | 7.78 | 1.50 | 0.870 |
| G | 349 | 6.09 | 0.889 | 0.682 |

Similarly, values of the rebound angle (H) and the transmitted acceleration (A) were evaluated for each of the viscoelastic bodies 14 (A-G) according to "Test 2," and the results are shown in Table 4.

[Table 4]

| Symbol | Test 2 | |
|---|---|---|
| | Rebound Angle (H) | Transmitted Acceleration (A) |
| | C° | G |
| A | 1 1 . 9 | 5 . 8 2 |
| B | 8 . 1 | 1 1 . 1 |
| C | 5 . 4 | 2 0 . 2 |
| D | 4 . 0 | 2 2 . 5 |
| E | 1 . 4 | 3 3 . 5 |
| F | 1 . 2 | 3 5 . 0 |
| G | 3 . 4 | 2 4 . 3 |

The above-mentioned "Test 2" will be explained here.

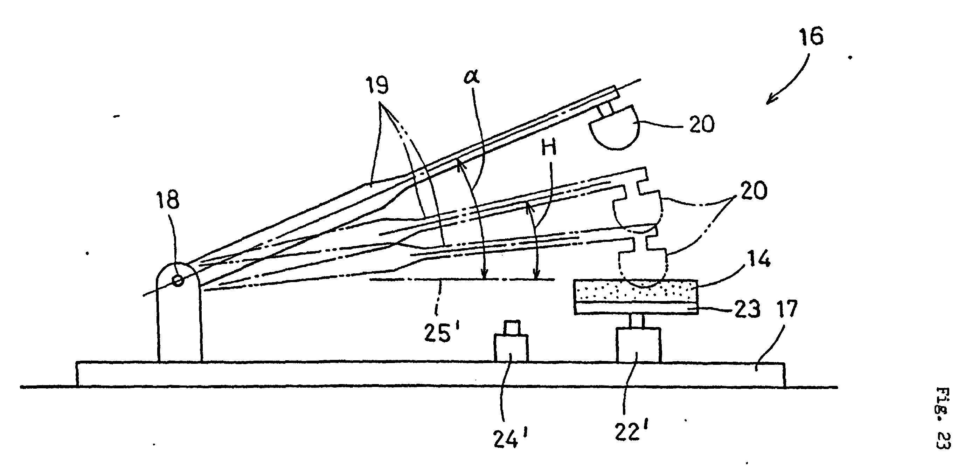

In Fig.23, a test device 16 comprises a base 17, a swing arm 19 mounted pivotally to the base 17 with a pivot shaft 18 for up-and-down swinging movement and a metal weight 20 attached at the moving end of the swing arm 19.

The length of the swing arm 19 from the pivot shaft 18 to the weight is 300 mm, and the shape of the weight 20 is a semi-sphere of 30mm diameter or a disk of 50mm diameter, both weighing 200g. Either one of the semi-sphere and the disk is selectively attached to the moving end of the swing arm 19 for detachment.

Downward of the weight 20, a load cell 22' is set on the base 17. On the load cell 22' is attached a support 23 of weight M, on which is set a viscoelastic body 14, a test piece, of 100mm diameter, thickness 20mm and weight m for detachment. The upper surface of the viscoelastic body 14 is arranged almost on the horizontal line 25' passing through the pivot shaft 18.

When measurements are made of the rebound angle (H) of the viscoelastic body 14 by the test device 16 described above, first, the viscoelastic body 14 to be measured is placed on the support 23 and the semi-spherical weight 20 is attached to the swing arm 19. Then, the swing arm 19 is turned upward till it makes an elevation angle of $\alpha=30°$ with the horizontal line 25' (a solid line in Fig.23). From this position, the weight 20 is dropped freely with the downward movement of the swing arm 19 to strike the viscoelastic body 14 (a double dot and dash line).

Then, the maximum rebound angle (H) of the swing arm 19 which rebounds and moves upward after striking, is measured by a laser displacement meter 24'.

Similarly, when measurements are made of the transmitted acceleration (A) of the viscoelastic body 14 by the test device 16 described above, first, the viscoelastic body 14 to be measured is placed on the support 23 and the disklike weight 20 is attached to the swing arm 19. Then, the swing arm 19 is turned upward till it makes an elevation angle of $\alpha=30°$ with the horizontal line 25' (a solid line in Fig.23). From this position, the weight 20 is dropped freely with downward movement of the swing arm 19 to strike the viscoelastic body 14 (a double dot and dash line).

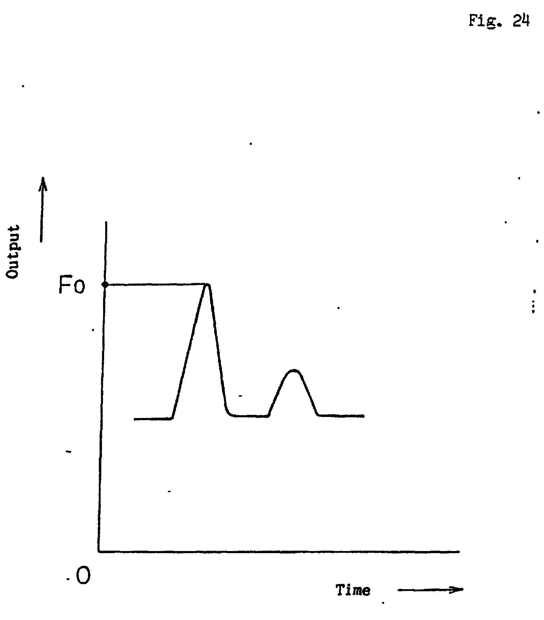

The transmitted acceleration (A) is calculated from the output signal $F_o$ (shown in Fig.24) of the load cell 22' detecting the striking and an equation of transmitted acceleration (A) = $F_o/(M + m)$.

In addition, for seats 5 each molded with viscoelastic bodies 14 (A-E) arranged in layers to cushions 13, respectively, experiments were made for evaluating the rider's feeling of vibration absorption during riding on the seat 5, and the test results are shown in Table 5.

Of the result of riding test evaluation in Table 5 , the marks ×, Δ and ○ mean poor, fair and good, respectively.

[Table 5]

| Symbol | Riding test evaluation |
|--------|------------------------|
| A      | ×                      |
| B      | Δ                      |
| C      | ○                      |
| D      | ○                      |
| E      | ○                      |

The relation between the apparent normal loss modulus (G2) for viscoelastic bodies 14 (A-E) in Table 3 above and the rebound angle (H) for the same viscoelastic bodies 14 (A-E) in Table 4 above, is shown in Fig. 5 using a diagram with X-axis on a log scale.

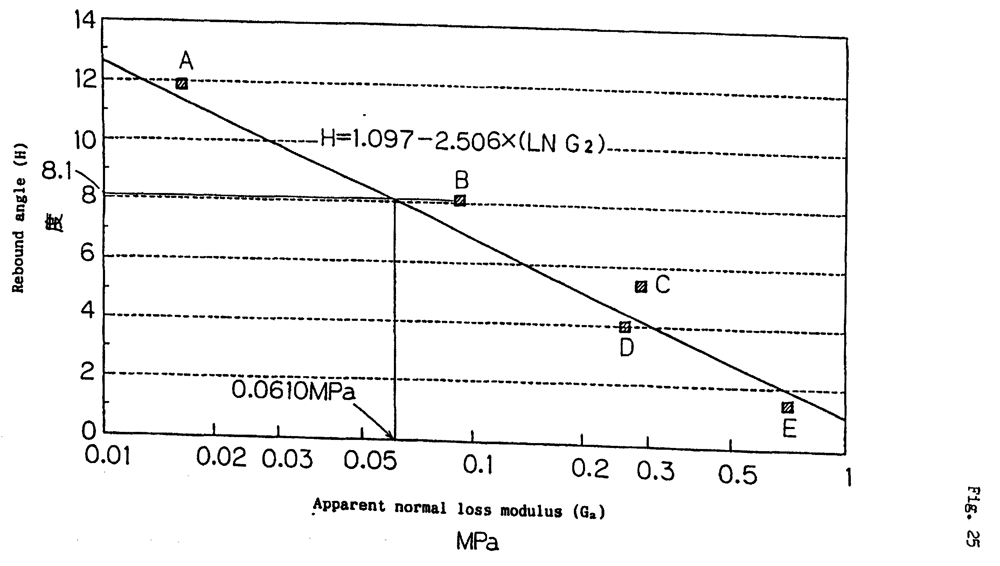

From Fig.25, H = 1.097 - 2.508x(natural log of $G_2$), Equation (1), is obtained.

In Fig.25, the rating of the riding test result for the viscoelastic body 14 (B) in Table 3 is Δ (fair). Then, the value of 8.1 of the rebound angle (H) for the viscoelastic body 14 (B) is substituted in Equation (1) above, and the apparent normal loss modulus ($G_2$) = 0.061MPa is obtained.

From these results, when the apparent normal loss modulus ($G_2$) > 0.061MPa, Equation (2), vibration of the motorcycle which might have been transmitted to the rider is absorbed adequately not only by the cushion 13' but by the viscoelastic body 14 so that the transmission of the vibration to the rider will surely be restricted.

Similarly, for seats 5 each molded with viscoelastic bodies 14 (B-G) arranged in layers to cushions 13', respectively, experiments were made for evaluating pains in rider's buttocks during riding on the seat, and the test results are shown in Table 6.

The marks ×, Δ and ○ in Table 6 have the same meaning as in the previous table.

[Table 6]

| Symbol | Riding test evaluation |
|--------|------------------------|
| B      | ○                      |
| C      | ○                      |
| D      | ○                      |
| E      | ×                      |
| F      | ×                      |

[Table 6]   (continued)

| Symbol | Riding test evaluation |
|--------|------------------------|
| G | Δ |

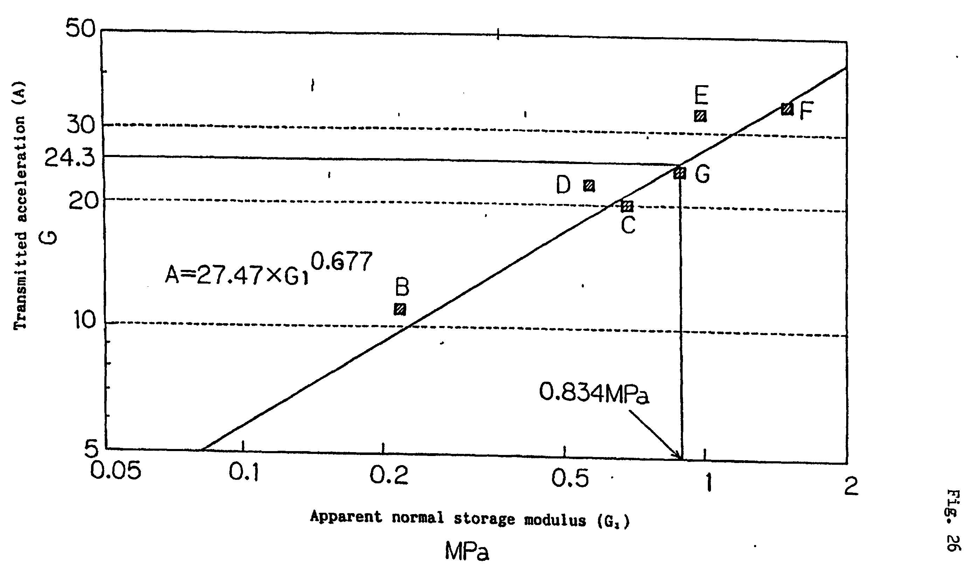

The relation between the apparent normal storage modulus ($G_1$) for viscoelastic bodies 14 (B-G) in Table 3 above and the transmitted acceleration (A) for the same viscoelastic bodies 14 (B-G) in Table above, is shown in Fig. 26 using a diagram with X, Y-axes on log scales.

From Fig. 26, $A = 27.47 \times G_1^{0,677}$, Equation (3), is obtained.

In Fig.26, the rating of the riding test result for the viscoelastic body 14 (G) in Table 6 is Δ (fair). Then, the value of 24.3 of the transmitted acceleration (A) for the viscoelastic body 14 (G) is substituted in Equation (3) above, and the apparent normal storage modulus ($G_1$) = 0.834MP a is obtained.

From these results, when the apparent normal storage modulus ($G_1$) < 0.834MPa, Equation (4), aches in rider's buttocks after long hour riding on the seat 5 will surely be avoided.

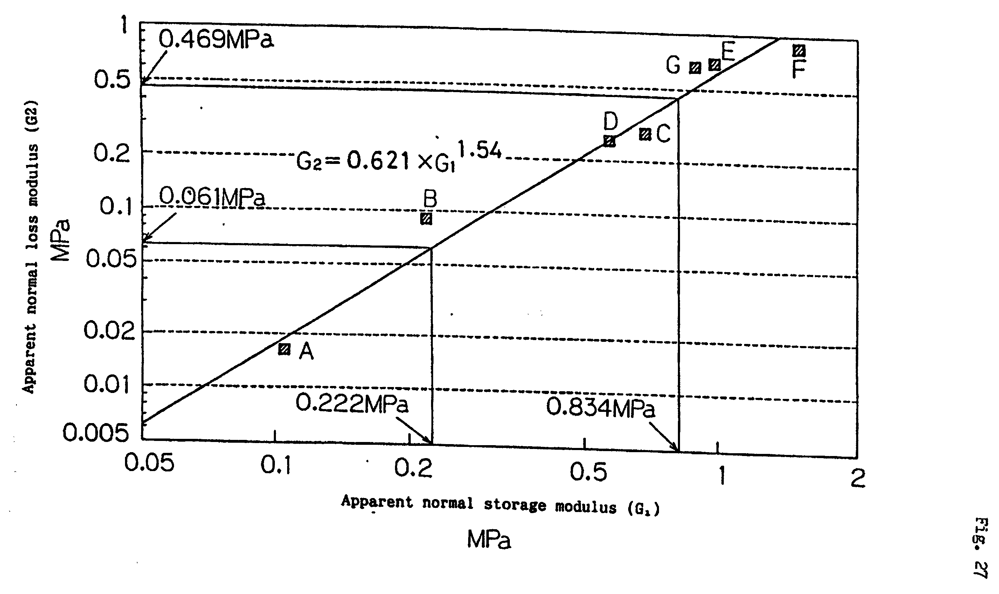

The relation between the apparent normal storage modulus ($G_1$) and the apparent normal loss modulus ($G_2$) is shown in Fig.27 using a diagram with X, Y-axes on log scales.

From Fig.27, $G2 = 0.621 \times G_1^{1,54}$, Equation (5), is obtained.

Then, by arranging Equations (2), (4), (5),

$$0.222\text{MPa} < G_1 < 0.834\text{MPa}, \qquad\qquad \text{Equation (6),}$$

and

$$0.061\text{MPa} < G_2 < 0.469\text{MPa}, \qquad\qquad \text{Equation (7),}$$

are obtained.

The relations between the normal storage modulus ($E_1$), the normal loss modulus ($E_2$) and the shape factor (S) of a cylindrical rubber section, the test piece, are as follows:

$$E_1 = G_1/(1 + 1.645S^2), \qquad\qquad \text{Equation (8),}$$

and

$$E_2 = G_2/(1 + 1.645S^2), \qquad\qquad \text{Equation (9).}$$

Where, d is the diameter of the rubber section and h is its thickness for S = d/4h; in the present case, d=100mm and h=20mm and thus we obtain S = 1.25, Equation (10).

Then, by substituting Equation (10) in Equations (8), (9) to arrange,

$$0.0628\text{MPa} < E_1 < 0.234\text{MPa}, \qquad\qquad \text{Equation (11),}$$

and

$$0.0171\text{MPa} < E_2 < 0.131\text{MPa}, \qquad\qquad \text{Equation (12),}$$

are obtained.

Therefore, if a viscoelastic body 14 satisfying Equations (11), (12) is used in the seat 5, vibration of the motorcycle body which might have been transmitted to the rider, is absorbed adequately and aches in rider's buttocks will surely be avoided.

The cushion 13', as shown in Fig. 22. is located on the upper side of the viscoelastic body 14 to come to contact with the rider's buttocks more directly. Since the cushion 13' is softer and has a smaller apparent normal storage

modulus ($G_1$) than the viscoelastic body 14, when the rider sits on the seat 5, the upper surface of the seat 5 is deformed so as to fit the shape of the rider's buttocks with adequate adaptation. Therefore, a seat according to this structure will prevent the rider's buttocks from aching after long hour riding.

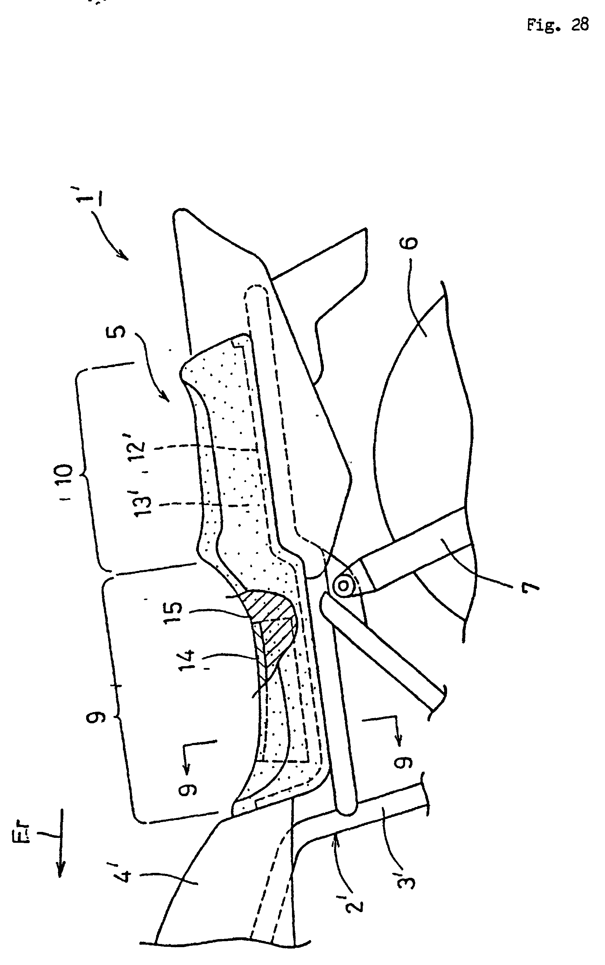

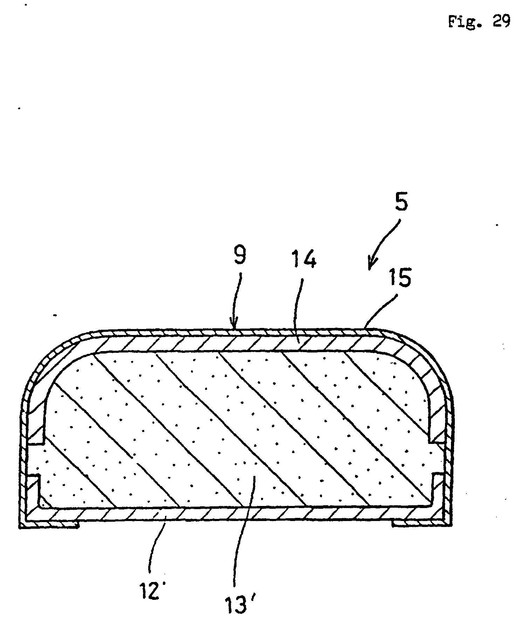

Still another embodiment 2 is shown in Figs. 28 and 29.

In Embodiment 2, a viscoelastic body 14 is arranged in layers over a cushion 13', and the viscoelastic body 14 and a skin 15 are integrated together by welding or bonding or the like.

In the above-mentioned "Test 2," the viscoelastic body 14 is arranged beneath the lower surface of the cushion 13'and in this case the rebound angle (H) is 12.4° . On the other hand, when the viscoelastic body 14 is arranged over the upper surface of the cushion 13' and integrated with the skin 15 as described above, the rebound angle (H) becomes 9.76° , which effects improved riding feeling of the motorcycle.

More specifically, since the viscoelastic body 14 is located on the upper side of the cushion 13' as shown in Fig.29, it will come to contact more directly with the rider's buttocks and tend to receive larger load. The viscoelastic body 14 has a larger apparent normal loss modulus ($G_2$) than the cushion 13' and accordingly the rebound of the rider's buttocks to the upper surface of the seat 5 will be restricted. That is, the rebound of the rider riding on the seat 5, due to vibration, will be restricted. Therefore, the seat 5 with the structure described above will provide improved riding feeling of the motorcycle 1'.

The structure of other embodiments is the same as that of Embodiment 1 above, its explanation is omitted by using drawings with common symbols.

The vehicle seat using shock absorbing material of this invention is not restricted to tandem seats for motorcycles as shown in the embodiments, but applicable to single seats for motorcycles, other vehicles or further to water vehicles such as so-called waterbikes. Moreover, the shock absorbing material of this invention can be applied comprehensively not only to the vehicle seats but other applications such as sole materials.

According to the invention, the shock absorbing material has a low adhesive property in spite of using supersoft urethane elastomer of high adhesive property as matrix resin, so that working efficiency during assembly will be improved.

The vehicle seat using this shock absorbing material of this invention can be fabricated to be lighter in weight. The hardness change dependent on temperature is less. The vibration absorption property is higher, without the disadvantage of rider's buttocks aching after a long time riding, thus providing a good feeling of fitness to the seat in riding.

According to the invention, since a seat for vehicles comprising a cushion, a viscoelastic body arranged in layers to the cushion and a skin covering both of said cushion and said viscoelastic body, is characterized in that the normal storage modulus ($E_1$) of said viscoelastic body satisfies an inequality of 0.0628MPa < $E_1$ < 0.234MPa, and the normal loss modulus ($E_2$) of the same satisfies an inequality of 0.0171MPa < $E_2$ < 0.131MPa, vibration of the vehicle body which might have been transmitted to the rider will be absorbed by the seat effectively and the rider's buttocks aching after long hour riding on the seat will be prevented.

**Claims**

1. A vehicle seat (1;5) comprising a cushion (12,13'), **characterized in that** said cushion (12,13') or at least one part thereof is a shock absorbing member (14) comprising super-soft urethane elastomer, said super-soft urethane elastomer comprising a matrix resin and resinous micro balloons.

2. A vehicle seat (1;5) according to claim 1, **characterized in that** said resinous micro balloons are mixed into urethane elastomer by an amount 1 to 5 weight per cent.

3. A vehicle seat (1;5) according to claim 1 or 2, **characterized in that** the ratio of the spring constant in compression to the spring constant in tension of said shock absorbing member (14) is larger than or equal to 1.1 and that the normal storage modulus ($E_1$) is smaller than or equal to 0.234 N/mm$^2$ (MPa).

4. A vehicle seat (1;5) according to claim 3, **characterized In that** said normal storage modulus ($E_1$) is smaller than or equal to 0.22 N/mm$^2$ (MPa).

5. A vehicle seat (1;5) according to at least one the preceding claims 1 to 4, **characterized in that** said resinous micro balloons having a diameter in the range of 10 to 100 μm and consisting of vinylidene-chloride acrylonitrile copolymer.

6. A vehicle seat (1;5) according to at least one of the preceding claims 1 to 5, **characterized in that** said super-soft urethane elastomer having an Ascar C hardness which is smaller than or equal to 15.

7. A vehicle seat (1;5) according to at least one of the preceding claims 1 to 6, **characterized in that** the normal storage modulus ($E_1$) of said shock absorbing member (14) varies vertically, so as to decrease towards the top and/or the bottom face and/or horizontally so as to decrease two respective side faces.

8. A vehicle seat (1;5) according to at least one of the preceding claims 1 to 7, **characterized in that** said cushion (12;13') comprising a cushion body (13) made of urethane foam and said shock absorbing member (14).

9. A vehicle seat (1;5) according to at least one of the preceding claims 1 to 8, **characterized in that** at least one shock absorbing member (14) is arranged at the bottom side and/or at least one at the top side of said cushion body (13).

10. A vehicle seat (1;5) according to at least one of the preceding claims 1 to 8, **characterized in that** said shock absorbing member (14) is arranged in the middle portion of said cushion body (13).

11. A vehicle seat (1;5) according to at least one of the preceding claims 1 to 8, **characterized in that** two opposite sides of said cushion (12;13') each comprising a cushion body (13) and that said shock absorbing member (14) occupies the whole section from the top to the bottom of said cushion (12;13') between said cushion bodies (13).

12. A vehicle seat (1;5) according to at least one of the preceding claims 1 to 11, **characterized in that** the normal storage modulus ($E_1$) and the normal loss modulus ($E_2$), respectively, of said shock absorbing member (14) satisfy the respective inequalities:

$$0.0628 \text{ N/mm}^2 < E_1 < 0.234 \text{ N/mm}^2$$

and

$$0.0171 \text{ N/mm}^2 < E_2 < 0.131 \text{ N/mm}^2.$$

13. A vehicle seat (1;5) according to at least one of the preceding claims 1 to 12, **characterized in that** said cushion (12;13') is covered by a skin (15) fastened to a bottom seat (11,12').

14. A process of manufacturing a shock absorbing member **characterized by** using the difference in density between the matrix resin of the super-soft urethane elastomer and the micro balloons and the gravity or centrifugal force in molding said shock absorbing member.

15. A process of manufacturing a shock absorbing member **characterized by** mixing magnetic substances, such as Iron powder, in the matrix resin in molding said shock absorbing member and provide an inclination to the distribution of said magnetic substances in the matrix resin by means of a magnetic field.

**Patentansprüche**

1. Fahrzeugsitz (1; 5) mit einem Kissen (12, 13'), **dadurch gekennzeichnet, dass** das Kissen (12, 13') oder zumindest ein Teil dessen ein stoßabsorbierendes Teil (14), mit einem super-weichen Urethan-Elasotmer, wobei das super-weiche Urethan-Elastomer eine Kunststoffmatrix und Kunststoff-Mikroballons aufweist.

2. Fahrzeugsitz (1; 5) nach Anspruch 1, **dadurch gekennzeichnet, dass** die Kunststoff-Mikroballons in das Urethan-Elastomer mit einer Menge von 1 bis 5 Gew.-% gemischt sind.

3. Fahrzeugsitz 1;5) nach Anspruch 1 oder 2, **dadurch gekennzeichnet, dass** das Verhältnis der Federkonstante beim Zusammendrücken zu der Federkonstante beim Auseinanderziehen des stoßabsorbierenden Teiles (14) größer als oder gleich zu 1.1 ist, und dass das normale Speichermodul ($E_1$) kleiner oder gleich 0.234 N/mm$^2$ (MPa) ist.

4. Fahrzeugsitz (1; 5) nach Anspruch 3, **dadurch gekennzeichnet, dass** der normale Speichermodul ($E_1$) kleiner oder gleich 0.22 N/mm$^2$ (MPa) ist.

5. Fahrzeugsitz (1; 5) nach zumindest einem der vorhergehenden Ansprüche 1 bis 4, **dadurch gekennzeichnet, dass** die Kunststoff-Mikroballons einen Durchmesser im Bereich von 10 bis 100 µm haben und aus Vinylidenchlorid-Acrylnitril-Copolymer bestehen.

6. Fahrzeugsitz (1; 5) nach zumindest einem der Ansprüche 1 bis 5, **dadurch gekennzeichnet, dass** das superweiche Urethan-Elastomer eine Ascar-C-Härte hat, die kleiner oder gleich 15 ist.

7. Fahrzeugsitz (1; 5) nach zumindest einem der Ansprüche 1 bis 6, **dadurch gekennzeichnet, dass** sich der normale Speichermodul ($E_1$) des stoßabsorbierenden Teiles (14) vertikal verändert, um in Richtung zu der Oberseite und / oder der Bodenseite und / oder horizontal abzunehmen, um so zwei jeweilige Seitenflächen zu vermindern.

8. Fahrzeugsitz (1; 5) nach zumindest einem der vorhergehenden Ansprüche 1 bis 7, **dadurch gekennzeichnet, dass** das Kissen (12; 13') einen Kissenkörper (13) aus Urethanschaum und das stoßabsorbierende Teil (14) aufweist.

9. Fahrzeugsitz (1; 5) nach zumindest einem der Ansprüche 1 bis 8, **dadurch gekennzeichnet, dass** zumindest ein stoßabsorbierendes Teil (14) an der Bodenseite und / oder zumindest einer an der Oberfläche des Kissenkörpers (13) angeordnet ist

10. Fahrzeugsitz (1; 5) nach zumindest einem der vorhergehenden Ansprüche 1 bis 8, **dadurch gekennzeichnet, dass** das stoßabsorbierende Teil (14) in dem Mittelabschnitt des Kissenkörpers (13) angeordnet ist.

11. Fahrzeugsitz (1; 5) nach zumindest einem der vorhergehenden Ansprüche 1 bis 8, **dadurch gekennzeichnet, dass** zwei gegenüberliegende Seiten des Kissens (12; 13') jeweils einen Kissenkörper (13) aufweisen und das stoßabsorbierende Teil (14) den gesamten Abschnitt von der Oberseite bis zum Boden des Kissens (12; 13') zwischen den Kissenkörpem (13) einnimmt.

12. Fahrzeugsitz (1; 5) nach zumindest einem der Ansprüche 1 bis 11, **dadurch gekennzeichnet, dass** jeweils der normale Speichermodul ($E_1$) und der normale Schwundmodul ($E_2$) des stoßabsorbierenden Teiles (14) den jeweiligen Ungleichungen genügen:

$$0,0628 \text{ N/mm}^2 < E_1 < 0,234 \text{ N/mm}^2$$

und

$$0,0171 \text{ N/mm}^2 < E_2 < 0,131 \text{ N/mm}^2.$$

13. Fahrzeugsitz (1; 5) nach zumindest einem der vorhergehenden Ansprüche 1 bis 12, **dadurch gekennzeichnet, dass** das Kissen (12; 13') durch eine Deckschicht (15) überzogen ist, das an einem Sitzboden (11, 12') befestigt ist.

14. Verfahren zur Herstellung eines stoßabsorbierenden Teile, **gekennzeichnet durch** Verwenden des Unterschiedes in der Dichte zwischen der Kunststoffmatrix des super-weichen Urethan-Elastomers und den Mikroballons und der Schwerkraft oder der Zentrifugalkraft beim Bilden des stoßabsorbierenden Teils.

15. Verfahren zur Herstellung eines stoßabsorbierenden Teiles, **gekennzeichnet durch** Mischen magnetischer Substanzen, wie z. B. Eisenpulver, in die Kunststoffmatrix beim Bilden des stoßabsorbierenden Teiles und Vorsehen einer Neigung zur Verteilung der magnetischen Substanzen in der Kunststoffmatrix mittels eines Magnetfeldes.

## Revendications

1. Siège de véhicule (1 ; 5) comprenant un coussin (12, 13'), **caractérisé en ce que** ledit coussin (12, 13') ou au moins une partie de celui-ci est un élément absorbant les chocs (14) comprenant un élastomère uréthanne super-souple (« super-soft »), ledit élastomère uréthane super-souple comprenant une résine matrice et des microballons résineux.

**2.** Siège de véhicule (1 ; 5) selon la revendication 1, **caractérisé en ce que** lesdits microballons résineux sont mélangés dans un élastomère uréthanne à raison de 1 à 5 pourcent en poids.

**3.** Siège de véhicule (1 ; 5) selon la revendication 1 ou 2, **caractérisé en ce que** le rapport de la constante de ressort en compression à la constante de ressort en tension dudit élément absorbant les chocs (14) est supérieur ou égal à 1,1 et **en ce que** le module de conservation normal ($E_1$) est inférieur ou égal à 0,234 N/mm$^2$ (MPa).

**4.** Siège de véhicule (1 ; 5) selon la revendication 3, **caractérisé en ce que** ledit module de conservation normal (E1) est inférieur ou égal à 0,22 N/mm$^2$ (MPa).

**5.** Siège de véhicule (1 ; 5) selon l'une quelconque des revendications précédentes 1 à 4, **caractérisé en ce que** lesdits microballons résineux présentent un diamètre dans la gamme de 10 à 100 μm et se composent d'un copolymère acrylonitrile/chlorure de vinylidène.

**6.** Siège de véhicule (1 ; 5) selon l'une quelconque des revendications précédentes 1 à 5, **caractérisé en ce que** ledit élastomère uréthane super-souple (« super-soft ») présente une dureté Ascar C qui est inférieure ou égale à 15.

**7.** Siège de véhicule (1 ; 5) selon l'une quelconque des revendications précédentes 1 à 6, **caractérisé en ce que** le module de conservation normal ($E_1$) dudit élément absorbant les chocs (14) varie verticalement de façon à diminuer vers la face supérieure et/ou la face inférieure et/ou horizontalement de façon à diminuer vers les deux faces latérales respectives.

**8.** Siège de véhicule (1 ; 5) selon l'une quelconque des revendications précédentes 1 à 7, **caractérisé en ce que** ledit coussin (12 ; 13') comprend un corps de coussin (13) fait de mousse d'uréthane et ledit élément absorbant les chocs (14).

**9.** Siège de véhicule (1 ; 5) selon l'une quelconque des revendications précédentes 1 à 8, **caractérisé en ce qu'**au moins un élément absorbant les chocs (14) est disposé sur la face inférieure et/ou au moins un sur la face supérieure dudit corps de coussin (13).

**10.** Siège de véhicule (1 ; 5) selon l'une quelconque des revendications précédentes 1 à 8, **caractérisé en *ce* que** ledit élément absorbant les chocs (14) est disposé dans la partie centrale dudit corps de coussin (13).

**11.** Siège de véhicule (1 ; 5) selon l'une quelconque des revendications précédentes 1 à 8, **caractérisé en ce que** les deux faces opposées dudit coussin (12 ; 13') comprennent chacun un corps de coussin (13) et **en ce que** ledit élément absorbant les chocs (14) occupe la section totale, de haut en bas, dudit coussin (12 ; 13') entre lesdits corps de coussin (13).

**12.** Siège de véhicule (1 ; 5) selon l'une quelconque des revendications précédentes 1 à 11, **caractérisé en ce que** le module de conservation normal ($E_1$) et le module de perte normale ($E_2$) dudit élément absorbant les chocs (14), satisfont, respectivement, les inégalités suivantes :

$$0{,}0628 \text{ N/mm}^2 < E_1 < 0{,}234 \text{ N/mm}^2$$

et

$$0{,}0171 \text{ N/mm}^2 < E_2 < 0{,}131 \text{ N/mm}^2.$$

**13.** Siège de véhicule (1 ; 5) selon l'une quelconque des revendications précédentes 1 à 12, **caractérisé en ce que** ledit coussin (12 ; 13') est recouvert d'une peau (15) fixée sur un siège arrière (11, 12').

**14.** Procédé pour fabriquer un élément absorbant les chocs, **caractérisé par** l'utilisation de la différence en densité entre la résine matrice de l'élastomère uréthane super-souple (« super-soft ») et les microballons et la force de gravité ou centrifuge pendant le moulage dudit élément absorbant les chocs.

**15.** Procédé pour fabriquer un élément absorbant les chocs, **caractérisé par** le mélange de substances magnétiques, telles qu'une poudre de fer, dans la résine matrice pendant le moulage dudit élément absorbant les chocs et la fourniture d'une inclinaison à la distribution desdites substances magnétiques dans la résine matrice au moyen d'un champ magnétique.

[Fig. 1]

[Fig. 2]

[Fig. 3]

Mixing Ratio of Resinous Microballoon and Loss Factor

Mixing ratio of resinous microballoon

[Fig. 4]

(A) Seat

Skin

Urethane foam

Shock absorbing material

(B) Vibration Test

Sinusoidal wave (1 to 10 Hz
Amplitude ± 3 mm

[Fig. 5]

Comparison of Vibration Transmission Factors.

[Fig. 6]

Autograph

Load cell

Pressure jig

Sample

[Fig. 7]

Pressure jig A

21

22

(A)

Pressure jig B

23

(B)

[Fig. 8]

24

Jig C

Sample

25

Jig D

22

[Fig. 9]

Bench Evaluation Value F for Feeling of Fitness and
Spring Constant Ratio p.

[Fig. 10]

Normal Storage Modulus and Physical Shock to Rider's Buttocks.

[Fig. 11]

[Fig. 12]

[Fig. 13]

[Fig. 14]

Fig. 15

Fig. 16

Fig. 17

Fig. 18

Fig. 19

Fig. 20

Fig. 21

Fig. 22

Fig. 23

Fig. 24

Apparent normal loss modulus ($G_a$)

MPa

EP 0 713 900 B1

Fig. 25

Fig. 26

Fig. 27

Fig. 28

EP 0 713 900 B1

Fig. 29